# EUROPÄISCHE PATENTSCHRIFT

(11) **EP 1 515 225 B1**
(45) Veröffentlichungstag und Bekanntmachung des Hinweises auf die Patenterteilung: **12.04.2017**
(21) Anmeldenummer: 04010210.5
(22) Anmeldetag: 29.04.2004
(51) Int. Cl.: G06F 7/58, H04L 9/06, H04L 9/12

(54) **Verschlüsselungssystem und Verfahren zur Ver-/Entschlüsselung sensibler Daten**
Cryptographic system and method for the encrpytion and decryption of sensitive data
Système et procédé cryptographiques pour le cryptage et décryptage des données confidentielles

(30) Priorität: 15.07.2003 DE 10332094
(43) Veröffentlichungstag der Anmeldung: 16.03.2005
(73) Patentinhaber: Fujitsu Technology Solutions Intellectual Property GmbH, 80807 München (DE)
(72) Erfinder: Depta, Robert, 86179 Augsburg (DE)
(74) Vertreter: Epping - Hermann - Fischer

(56) Entgegenhaltungen:
- WO-A-00/57595
- MENEZES, OORSCHOT, VANSTONE: "Handbook of applied cryptography, PASSAGE" CRC PRESS SERIES ON DISCRETE MATHEMATICS AND ITS APPLICATIONS, CRC PRESS, 1997, Seiten 171-173, 16-21, 241-242, XP002310239 BOCA RATON, FL, USA ISBN: 0-8493-8523-7
- SCHNEIER B: "APPLIED CRYPTOGRAPHY. PROTOCOLS, ALGORITHMS, AND SOURCE CODE IN C, PASSAGE" JOHN WILEY & SONS, 1996, Seiten 421-428, 10-17, XP002310240 NEW YORK, USA ISBN: 0-471-11709-9

## Beschreibung

Die Erfindung betrifft ein Verschlüsselungssystem zur Ver- und Entschlüsselung sensibler Daten beim Datenaustausch von zumindest zwei miteinander kommunizierenden elektronischen Geräten und ein Verfahren zur Ver- und Entschlüsselung sensibler Daten.

Ein elektronischer Datenaustausch, insbesondere zwischen tragbaren digitalen Informationsaustauscheinheiten wie zum Beispiel Computereinheiten, Laptops, Notebooks oder Tablet-Einheiten, mobilen Telefoneinheiten und Daten-Lieferanten, wie beispielsweise Diensteanbieter im Internet, zum Austausch sensibler Daten über große Übertragungsstrecken und unsichere Verbindungsknoten führt dazu, daß unberechtigte Personen auf einfache Weise auf die ausgetauschten Daten zugreifen können. Aus diesem Grunde gewinnt ein Schutz der ausgetauschten Daten immer mehr an Bedeutung.

Um die ausgetauschten Daten zu schützen, werden Daten sicherheitsrelevanter Anwendungen verschlüsselt. Hierzu werden Verschlüsselungssysteme vorgesehen, die sich zur Verschlüsselung der Daten elektronischer Schlüssel bedienen. Es müssen jedoch nicht nur die zu übertragenden Daten geschützt werden, sondern in gleichem Maße auch die erzeugten Schlüssel und das Verschlüsselungssystem selbst. Gelingt einem Angreifer das Ausspähen des Verschlüsselungs- und Schlüsselerzeugungssystems, so kann dieser das Verschlüsselungssystem manipulieren oder ausschalten und übertragene Daten als Klartext mitlesen und zur weiteren Analyse verwenden.

Bisherige Verschlüsselungssysteme arbeiten entweder mit einem Block- oder einem Streamalgorithmus zur Verschlüsselung der Daten.

Bei einem Blockalgorithmus werden konstante Schlüssellängen verwendet. Mehrere Nachrichten lassen sich mit den selben Schlüsselpaaren ver- und entschlüsseln. Um standardisierte digitale Schaltungsanordnungen bzw. Softwareprozeduren oder IP-Cores für Verschlüsselungssyteme zu entwickeln, sind die Algorithmen standardisiert worden und liegen somit offen. Eine Erhöhung der Sicherheit der Verschlüsselung ist meist nur über eine Erhöhung der Schlüssellänge und/oder durch eine Erhöhung der Anzahl an Rekurrenz-Schritten erzielbar. Mit der Kenntnis des Verschlüsselungs-Algorithmus in Verbindung mit den zugehörigen Schlüsseln können nachträglich alle mit diesem System verschlüsselte Daten entschlüsselt werden.

Bei der Verwendung eines Streamalgorithmus werden die Schlüssel entweder nach einem bestimmten Algorithmus, zum Beispiel einem Quasi-Random Algorithmus mit entsprechenden Initialisierungsvektoren, der jedem Teilnehmer bekannt ist, generiert oder sich wiederholende längere Schlüssel einer Schlüsseldatenbank entnommen, wobei die Schlüssel bei jedem Teilnehmer in einer Datenbank einzeln für jede Nachricht aufbewahrt werden.

Den bisherigen Ver-/Entschlüsselungssystemen ist gemeinsam, daß sie eine variable Nachricht bzw. Daten starr nach einem festgelegten Muster ver- und entschlüsseln. Als starr ist in diesem Zusammenhang anzusehen, daß sowohl die zu verwendenden Schlüssel als auch der Verschlüsselungs-Algorithmus fest definiert ist. Abhängig von den verwendeten Schlüsseln und übertragenen Daten ergibt eine Analyse der physikalischen Seiteneffekte der Schaltungsanordnung ein charakteristisches Profil. Dieses Profil erlaubt mit mathematischen und/oder statistischen Mitteln Rückschlüsse auf die verwendeten Schlüssel und die verschlüsselten Daten.

Das Buch "Handbook of Applied Cryptography", von Menezes et al., 1997, CRC Press Series on Discrete Mathematics and its Applications, Boca Raton, FL, US, beschäftigt sich unter anderem mit der Erzeugung von zufälligen Bitsequenzen. Es offenbart, dass diese eine natürlich vorkommende Quelle von Zufälligkeiten erfordern. Als mögliche Quellen derartiger zufälliger Signale ist im Abschnitt (i.) "Hardware-Based Generators" unter anderem ein Tonsignal eines Mikrofons oder ein Videosignal einer Kamera angegeben. Des Weiteren sind im Abschnitt (ii.) "Software-Based Generators" als weitere mögliche Quellen Werte eines Betriebssystems wie beispielsweise eine Systemauslastung und eine Netzwerkstatistik angegeben.

Das Buch "Applied Cryptography, Protocols, Algorithms, and Source Code in C", von B. Schneider, John Wiley and Sons, 1996, New York, USA offenbart ebenfalls unterschiedliche Möglichkeiten zur Erzeugung von zufälligen Bitsequenzen.

Die WO 00/57595 A1 betrifft ein Verfahren und ein Gerät zur Verschlüsselung und Entschlüsselung von Daten, das zwei oder mehr kryptografische Algorithmen zum Erreichen eines hohen Datendurchsatzes ohne Kompromittierung der Sicherheit einsetzt. Das System ist insbesondere nützlich zur Implementierung einer Software zum Schutz großer Anzahlen von Multimediadaten bei der Übertragung über Hochgeschwindigkeitskommunikationsverbindungen.

Aufgabe der Erfindung ist es, ein sicheres Ver-/Entschlüsselungssystem sowie ein sicheres Verfahren zur Ver-/Entschlüsselung sensibler Daten über größere Übertragungswege und unsichere Verbindungen anzubieten.

Diese Aufgabe wird durch ein Verschlüsselungssystem für ein erstes elektronisches Gerät zur Ver- oder Entschlüsselung sensibler Daten beim Datenaustausch mit zumindest einem, mit dem ersten elektronischen Gerät kommunizierenden zweiten elektronischen Gerät mit einem gleichartigen Verschlüsselungssystem gelöst, das
- ein Datenstrom-Modul zur Bereitstellung eines synchronen, kontinuierlich verfügbaren, multimedialen Datenstromes als Rohmaterial für eine Schlüsselgenerierung,
- ein Datenmodul zur Vorbereitung der Daten für die Ver-/Entschlüsselung,
- ein Schlüssel-Generator, dem ein vereinbarter Informationsabschnitt des kontinuierlich verfügbaren, multimedialen Datenstroms des Datenstrom-Moduls zugeführt wird,
- eine Ver-/Entschlüsselungseinheit, die mit dem Datenmodul und dem Schlüssel-Generator verbunden ist und die die sensiblen Daten mit einem Schlüsselwort ver-/entschlüsselt, und
- eine Ausgabe-Einheit zur Weiterleitung der verschlüsselten/entschlüsselten Daten
aufweist,
wobei der Schlüssel-Generator aus dem ihm zugeführten Datenstrom je ein Schlüsselwort für jede zu ver-/entschlüsselnde Nachricht für das erste Gerät erzeugt, das gleichzeitig durch einen Schlüsselgenerator des Verschlüsselungssystems des mindestens einen zweiten Geräts erzeugt wird.

Weiterhin wird die Aufgabe durch ein Verfahren zur Ver-/Entschlüsselung sensibler Daten gemäß dem Anspruch 30 gelöst.

Die Erfindung basiert auf einem symmetrischen Verschlüsselungsverfahren, wobei jedoch keine mit einem Random-Algorithmus generierte Schlüssel verwendet werden. Als Rohmaterial für die Erzeugung der Schlüssel wird sich auf jedem miteinander kommunizierenden elektronischen Gerät eines kontinuierlich verfügbaren digitalen, multimedialen Datenstroms, bedient, der dem Schlüssel-Generator zugeführt wird. Besonders vorteilhaft ist es, daß über eine Vielfalt an heute bereits verfügbaren Technologien Datenströme der vorab genannten Art mittels eines Daten-Moduls abrufbar sind. Beispielsweise können hierzu sämtliche im Internet verfügbaren Daten von Datenstrom-Lieferanten, wie Lieferanten für Audio- oder Video-Daten, abgerufen werden. Ebenso eignen sich die von einem Empfängermodul gelieferten digitalen Broadcast-Daten sehr gut als Grunddaten für die Erzeugung eines Schlüssels. Hierzu können dem Benutzer mehrere Datenübertragungskanäle gleichzeitig zur Verfügung gestellt werden. Die Datenübertragung kann über verschiedenste Medien erfolgen. Sie können beispielsweise über ein Kabelnetz empfangen werden oder über eine terrestrische Infrastruktur, die für solche Dienste in Zukunft flächendeckend zur Verfügung stehen wird.

Sehr vorteilhaft ist bei dieser Übertragungstechnik, daß die Datenübertragung eine sehr geringe Fehlerhaftigkeit aufweist. Vorstellbar ist auch der Empfang des Datenstroms über Satelliten. Weiterhin kann ebenso zur Erzeugung eines synchronen Datenstroms eine Multimedia-Quelle, zum Beispiel ein CD-Player, ein DVD-Player, oder ein MP3-Player, dienen, die in einem tragbaren Medium angeordnet ist.
Ebenso können auch für alle Teilnehmer verfügbare nicht-multimediale Datenstromquellen verwendet werden. Als zusätzliche Steigerung der Sicherheit der Schlüssel kann quasi-random Channel-Wechsel durchgeführt werden.

Eine weitere vorteilhafte Ausgestaltung der Erfindung sieht vor, daß dem Schlüsel-Generator individuelle Systemdaten und personalisierte Daten autorisierter Benutzer zugeführt werden. Hierzu werden zum einen Systemdaten des Verschlüsselungssystems in einem Personalisierungs-Modul des Verschlüsselungssystems aufgezeichnet, um beispielsweise eine eindeutige Zuordnung der Systeme zu einer Personengruppe zu erzielen. Zum anderen ermöglicht die Aufzeichnung biometrischer Daten den Zugang einzelner Personen zum System und die Personalisierung einzelner Systemeinheiten. Die als Hash-Werte in dem Personalisierungs-Modul abgelegten Daten werden dem Schlüssel-Generator zugeführt und können in vorteilhafter Weise dazu benutzt werden, eine weitere Variation in der Schlüsselgenerierung zu erzielen.

Eine weitere Ausgestaltung der Erfindung sieht vor, daß ein Zeitgeber-Modul die internen Uhren der elektronischen Geräte synchronisiert und den dem Schlüssel-Generator zugeführte Datenstrom mit einem identischen Referenzzeitstempel versieht. Normalerweise würden die empfangenen digitalen Datenströme erst in einem FIFO des Datenmoduls zwischengespeichert werden und Hash-Werte über eine Teilinformation des Datenstroms auf allen miteinander kommunizierenden elektronischen Geräten, im folgenden Teilnehmer genannt, gebildet werden. Diese Hash-Werte würden zur Abstimmung bezüglich ihrer Kohärenz unter den Teilnehmern ausgetauscht und verifiziert werden und erst bei einer Übereinstimmung der Hash-Werte die Teilinformationen des Datenstroms zur Schlüsselgenerierung Verwendung finden.

Um diese Vorgehensweise zu umgehen, insbesondere bei Systemen, die eine CRC-Summe liefern, um Daten konsistent zu halten, werden die internen Uhren der Teilnehmer synchronisiert. Dies hat den Vorteil, daß die gleichzeitig bei den Teilnehmern ankommenden Datenströme auf einfache Weise verwaltet werden können. Bei allen Teilnehmern werden ankommende Daten zur Schlüsselgenerierung mit dem gleichen Zeitstempel versehen. Lediglich die Informationen über aufgetretene Datenverluste werden unter den Teilnehmern ausgetauscht, um die Teilinformationen der Datenströme, die für eine Schlüsselgenerierung verwendet werden, zu korrigieren.

Zur Erzeugung eines Referenzzeitstempels weist das Zeitgeber-Modul ein Positionierungssystem auf, welches geographische Koordinaten und geographische Höhenangaben des jeweiligen Teilnehmers empfängt. Ein Funkuhr-Modul liefert einen Zeitstempel mit einer Atomuhrgenauigkeit. Da die Koordinaten der Sendeantenne des Betreibers der Atomuhr genau bekannt sind, berechnet eine Steuereinheit des Zeitgeber-Moduls die für jeden Teilnehmer positionsbezogene Verzögerung des Zeitstempels. Die Steuereinheit führt eine Korrektur durch, so daß die internen Uhren der Teilnehmer mit einer einem Koordinatenmeßsystem bezogenen Ungenauigkeit synchron zur Referenzuhr laufen.

Bei der Verwendung eines Satellitenempfangs wird anhand der Positionierungsdaten auch die Entfernung zum Satellitensender ermittelt, um eine Korrektur des Zeitstempels des empfangenen Datenstroms durchzuführen.

Mit dem vorab beschriebene Verfahren werden sämtliche Signallaufzeitunterschiede empfangener Datenströme ausgeglichen. Die internen Uhren aller Teilnehmer laufen synchron und die empfangenen Datenströme bekommen einen für alle Teilnehmer identischen Referenzzeitstempel.

Eine vorteilhafte Erweiterung der Erfindung stellt die durch den Schlüssel-Generator vorgesehene Umsetzung der Schlüsselgenerierung dar. Der Schlüssel-Generator versieht die ihm zur Verfügung gestellten Datenströme mit dem Referenzzeitstempel und mischt die Datenströme nach einem vereinbarten Algorithmus. Die Auswahl der zu verwendenden Datenströme ist nicht starr festgelegt und kann jederzeit abgeändert werden. Dadurch daß alle Teilnehmer mit einer identischen Datenstrom-Basis und einer identischen Zeitbasis arbeiten, können für die Teilnehmer synchrone Misch-Algorithmen eingesetzt werden, die nur Teilinfomationen der Datenströme miteinander zur Erzeugung eines Schlüssels verbinden. In vorteilhafter Weise können vom Schlüssel-Generator die systembezogenen Daten sowie individuelle Merkmale in die Schlüsselgenerierung mit einbezogen werden.

Eine weitere vorteilhafte Ausgestaltung der Erfindung sieht vor, daß der Verschlüsselungsalgorithmus der Ver-/Entschlüsselungseinheit als einfachste Verschlüsselungsmethode auf einer arithmetischen XOR-Verknüpfung basiert. Als Konstanten des Verschlüsselungsalgorithmus können zur Bildung verschiedenster Systeme die systembezogenen Daten mit einbezogen werden. Die Ver-/Entschlüsselungseinheit arbeitet mit einem symmetrischen Verschlüsselungsverfahren, daß heißt die selben Schlüssel werden sowohl für die Verschlüsselung als auch für die Entschlüsselung verwendet.

Ein symmetrischer Verschlüsselungsalgorithmus kann sich beispielsweise wie folgt gestalten:
CIPHER = PLAIN 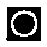 ENDE_KEY
PLAIN = CIPHER 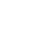 ENDE_KEY wobei
   "PLAIN" den Daten in einer nicht verschlüsselten Form,
   "CIPHER" den verschlüsselten Daten
   " 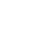 " dem Verschlüsselungsalgorithmus und
   "ENDE_KEY" dem Schlüssel zur Ver- und Entschlüsselung entspricht.

Für ein XOR-Verknüpfung als Verschlüsselungsalgorithmus ergibt sich somit:
CIPHER = PLAIN XOR ENDE_KEY
PLAIN = CIPHER XOR ENDE_KEY

Zusätzlich können zur Schlüsselgenerierung die systembezogenen Konstanten mit einbezogen werden.

Zusammenfassend weist das vorgeschlagene Verfahren und das Verschlüsselungssystem zur Durchführung des Verfahrens die folgenden Vorteile auf:
- das Verschlüsselungssystem erzeugt keine durch mathematische Algorithmen bestimmbare Schlüssel,
- die Schlüssel weisen eine unbegrenzte Länge auf,
- die Schlüssel sind nicht wiederholbar,
- die Schlüssel sind bei allen Teilnehmern gleichzeitig verfügbar,
- die nicht identischen Schlüssel sind gleichzeitig mehrfach vorhanden,
- die Schlüssel können bei personalisierten Geräten zusätzlich mit spezifischen Daten verschlüsselt werden,
- ein einmalig generierter Schlüssel wird grundsätzlich nur für eine Übertragung eines Datenpaketes benötigt,
- die Schlüssellänge entspricht der zu übertragenden Informationslänge,
- die Anwendung des Verschlüsselungssystems ist sowohl für stationäre als auch für mobile Teilnehmer geeignet,
- mehrere Schlüssel können gleichzeitig verwendet oder dynamisch gemischt werden,
- die erzeugten Schlüssel können zusammen mit beliebigen externen Schlüsseln und Verschlüsselungsverfahren kombiniert werden und
- die Sicherheitsstufe ist beliebig nach oben ohne weitere Hardware-Kosten erhöhbar.

Weitere vorteilhafte Ausgestaltungen der Erfindung sind in den Unteransprüchen angegeben.

Die Erfindung wird nachfolgend anhand eines Ausführungsbeispiels unter Bezugnahme auf eine Zeichnung näher erläutert.

Es zeigt:

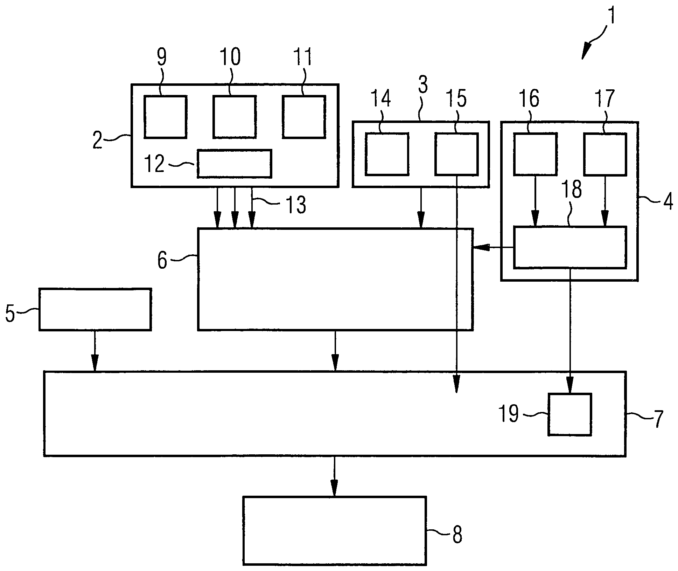

- Figur 1: ein Blockschaltbild eines erfindungsgemäßen Verschlüsselungssystems.

Die Figur 1 zeigt das Blockschaltbild eines erfindungsgemäßen Verschlüsselungssystems 1. Das Verschlüsselungssystem 1 arbeitet mit einer identischen Hardware für die Ver- und Entschlüsselung von Daten und weist als Hauptkomponenten ein Datenstrom-Modul 2, ein Personalisierungsmodul 3, ein Zeitgeber-Modul 4, ein Daten-Modul 5, ein Schlüssel-Generator 6, eine Ver-/Entschlüsselungseinheit 7 und eine Ausgabe-Einheit 8 auf.

Das Datenstrom-Modul 2 liefert für alle an einer Kommunikation teilnehmenden Geräte identische Rohdaten zur Erzeugung eines Schlüssels. Als Quellen für die Rohdaten können alle digitalen, insbesondere multimedialen Datenströme von
- sämtlichen im Internet vorhandenen Datenstrom-Lieferanten, die Audio, Video-Daten und andere Dienste über eine Internet Schnittstelle 9 liefern,
- digitalen Broadcast-Daten-Anbietern, deren Datenströme über ein Kabelnetz, terrestrisch oder über einen Satelliten mittels eines Empfängermoduls 10 empfangen werden und
- einer Multimedia-Datenquelle 11
verwertet werden. Die empfangenen Rohdaten werden in einer Speichereinheit 12 zwischengespeichert und dem Schlüssel-Generator 6 selektiv über mehrere Kanäle 13 zugeführt.

Um eine eindeutige Zuweisung der Teilnehmer-Geräte zu bestimmten Personengruppen zu erreichen, können die Verschlüsselungssysteme personalisiert werden, daß heißt die Systeme werden mit definierten geheimen systemspezifischen Daten geladen, die in einer Speichereinheit 14 des Personalisierungs-Moduls 3 abgespeichert werden. Auch einzelnen Personen kann ein Zugang zu einem Teilnehmer-Gerät gewährleistet werden, indem Hash-Werte von biometrischen Daten oder FFT-Abdrücke von Stimmen eines autorisierten Benutzers in einer weiteren Speichereinheit 15 des Personalisierungs-Moduls 3 abgelegt sind und zur Authentifizierung des Benutzers mit aktuell eingegebenen Daten verglichen werden. Sowohl die geheimen Geräte-Daten als auch die benutzerspezifischen Daten können dem Schlüssel-Generator 6 zugeführt und in die Schlüsselerzeugung mit einbezogen werden. Hierzu müssen die Hash-Werte aller Benutzer in den jeweiligen in Frage kommenden Geräten abgespeichert sein.

Mittels des Zeitgeber-Moduls 4 werden die internen Uhren der an der Kommunikation teilnehmenden elektronischen Geräte synchronisiert und der dem Schlüssel-Generator 6 zugeführte Datenstrom mit einem für alle Teilnehmer identischen Referenzzeitstempel versehen. Hierzu weist das Zeitgeber-Modul 4 ein Positionierungssystem 16 auf, welches geographische Koordinaten und geographische Höhenangaben des jeweiligen elektronischen Gerätes empfängt. Eine erreichbare Synchronität der Referenzzeit hängt von der Genauigkeit der Koordinatenbestimmung der teilnehmenden Geräte ab. Bei einer Genauigkeit von 10 Metern erreicht man heute eine Zeitsynchronität von deutlich weniger als 40 Nanosekunden. Über ein Funkuhr-Modul 17 des Zeitgeber-Moduls 4 wird ein Zeitstempel mit einer Atomuhrgenauigkeit empfangen. Da die Koordinaten der Sendeantenne des Atomuhrzeitgebers genau bekannt sind, berechnet eine Steuereinheit 18 des Zeitgeber-Moduls 4 die entsprechende für jeden Teilnehmer verschiedene positionsbezogene Verzögerung dieses Zeitstempels und führt für die Systemeinheit eines jeden Teilnehmers eine interne Zeitkorrektur durch. Berücksichtigt wird hierbei auch die Satellitensendezeit zum Empfang der entsprechenden Koordinaten, wobei die Satellitensendezeit zurückberechnet wird und als Zeitstempel abgelegt wird. Diese Korrektur bewirkt, daß die internen Uhren aller Teilnehmer mit einer auf das Koordinatenmeßsystems bezogenen Ungenauigkeit synchron zur Atomuhrzeit laufen. Die bei allen Teilnehmern gleichzeitig empfangenen Datenströme erhalten den gleichen Referenzzeitstempel, so daß Signallaufzeitunterschiede ausgeglichen werden.

Zur Vorbereitung einer Verschlüsselung werden zu verschlüsselnde Daten in dem Daten-Modul 5 komprimiert und in Pakete gleicher Länge unterteilt. Die Komprimierung ermöglicht eine Minimierung benötigter Bandbreite und erschwert eine statistische Analyse der Daten. Empfängt ein Teilnehmer verschlüsselte Daten, werden diese im Daten-Modul 5 für die Entschlüsselung vorbereitet, in dem die Daten beispielsweise dekomprimiert und anschließend an die Ver-/Entschlüsselungseinheit 7 weitergeleitet werden.

In dem Schlüssel-Generator 6 werden die vom Datenstrom-Modul 2 zur Verfügung gestellten Daten mit einem Referenzzeitstempel versehen und nach einem vereinbarten Algorithmus gemischt. Die Auswahl des zu verwendenden Datenstroms ist nicht starr festgelegt und kann jederzeit durch die Teilnehmer geändert werden. Dadurch, daß alle Teilnehmer mit einer identischen Datenstrom-Basis und einem identischen Referenzzeitstempel arbeiten, können bei allen Teilnehmern synchrone Misch-Algorithmen eingesetzt werden, wobei nur Abschnitte des Datenstroms miteinander verbunden werden. Um einen Schlüssel zu erzeugen, können die im Personalisierungs-Modul 3 gespeicherten systembezogenen geheimen Daten mit einbezogen werden.

Nicht benötigte oder für eine spätere Verwendung vorgesehene Schlüssel werden in einer Ersatzschlüssel-Einheit 19 der Ver-/Entschlüsselungseinheit 7 abgespeichert. Der Schlüssel-Generator 6 erzeugt Hash-Werte über den Inhalt der Ersatzschlüssel-Einheit 19. Diese Hash-Werte werden unter den Verschlüsselungssystemen 1 der teilnehmenden Geräte regelmäßig zur Erzielung einer Kohärenz ausgetauscht.

Die Ver-/Entschlüsselungseinheit 7 arbeitet mit einem symmetrischen Verschlüsselungsverfahren und ver- oder entschlüsselt die ihr über das Daten-Modul 5 zugeführten Daten. Die Auswahl der Verschlüsselungsverfahren ist nicht festgelegt. Als Konstanten können der Ver-/Entschlüsselungseinheit 7 die in der Speichereinheit 14 des Personalisierungs-Moduls 3 gespeicherten systembezogenen Daten zugeführt und beim Verschlüsselungsalgorithmus verwendet werden.

Parallel mit der Verschlüsselung werden für die zur Schlüsselerzeugung vereinbarten Datenströme und Zeitstempel Hash-Werte erzeugt und in die verschlüsselten und an die Teilnehmer zu sendenden Daten eingebettet. Das die Daten empfangene Verschlüsselungssystem 1 wertet nach dem Entschlüsseln der Daten diese Hash-Werte aus und vergleicht sie mit den eigenen auf der Basis der vereinbarten Datenströme und Zeitstempel erzeugten Hash-Werten. Stimmen die Hash-Werte nicht überein, liegen fehlerhafte Daten vor. Das die Daten empfangene Verschlüsselungssystem 1 fordert beim sendenden Teilnehmer einen wiederholten Datentransfer an, wobei die erneut zu verschlüsselnden Daten mit einem in der Ersatzschlüssel-Einheit 19 des Verschlüsselungssystems 1 des sendenden Teilnehmers gespeicherten Schlüssel verschlüsselt werden.

Verschlüsselte Daten werden über die Ausgabe-Einheit 8 an einen Teilnehmer, entschlüsselte Daten über die Ausgabe-Einheit 8 an die jeweilige Applikation weitergeleitet, wobei die Ausgabe-Einheit 8 über entsprechende hier nicht aufgeführte Schnittstellen verfügt.

Mit dem vorgeschlagenen Verschlüsselungssystem wird aufgrund der Verwendung nicht analysierbarer Schlüssel und Verschlüsselungsalgorithmen ein Höchstmaß an Sicherheit bei der Übertragung verschlüsselter Daten erzielt.

### Bezugszeichenliste

- 1: Verschlüsselungssystem
- 2: Datenstrom-Modul
- 3: Personalisierungs-Modul
- 4: Zeitgeber-Modul
- 5: Daten-Modul
- 6: Schlüssel-Generator
- 7: Ver-/Entschlüsselungseinheit
- 8: Ausgabe-Einheit
- 9: Internet-Schnittstelle
- 10: Empfänger-Modul
- 11: Multimedia-Datenquelle
- 12: Speichereinheit
- 13: Kanal
- 14: Speichereinheit
- 15: Weitere Speichereinheit
- 16: Positionierungssystem
- 17: Funkuhr-Modul
- 18: Steuereinheit
- 19: Ersatzschlüssel-Einheit

## Patentansprüche

1. Verschlüsselungssystem (1) für ein erstes elektronisches Gerät zur wahlweisen Ver- oder Entschlüsselung sensibler Daten beim Datenaustausch mit zumindest einem, mit dem ersten elektronischen Gerät kommunizierenden zweiten elektronischen Gerät mit einem gleichartigen Verschlüsselungssystem (1), aufweisend:
- ein Datenstrom-Modul (2) zur Bereitstellung eines synchronen, kontinuierlich verfügbaren, multimedialen Datenstromes als Rohmaterial für eine Schlüsselgenerierung,
- ein Daten-Modul (5) zur Vorbereitung der Daten für die Ver-/Entschlüsselung,
- ein Schlüssel-Generator (6), dem ein vereinbarter Informationsabschnitt des kontinuierlich verfügbaren, multimedialen Datenstroms des Datenstrom-Moduls (2) zugeführt wird,
- eine Ver-/Entschlüsselungseinheit (7), die mit dem Daten-Modul (5) und dem Schlüssel-Generator (6) verbunden ist und die die sensiblen Daten mit einem Schlüsselwort ver-/entschlüsselt,
- eine Ausgabe-Einheit (7) zur Weiterleitung der verschlüsselten/entschlüsselten Daten,
wobei der Schlüssel-Generator (6) aus dem ihm zugeführten Datenstrom je ein Schlüsselwort für jede zu ver-/entschlüsselnde Nachricht für das erste Gerät erzeugt, das gleichzeitig durch einen Schlüsselgenerator (6) des Verschlüsselungssystems (1) des mindestens einen zweiten Gerät erzeugt wird.

2. Verschlüsselungssystem (1) nach Anspruch 1,
**dadurch gekennzeichnet, daß**
das Datenstrom-Modul (2) den kontinuierlich verfügbaren, multimedialen Datenstrom über im Internet vorhandene digitale Datenstrom-Lieferanten bezieht.

3. Verschlüsselungssystem (1) nach Anspruch 1,
**dadurch gekennzeichnet, daß**
das Datenstrom-Modul (2) den kontinuierlich verfügbaren, multimedialen Datenstrom als Broadcast-Daten über ein Kabelnetz bezieht.

4. Verschlüsselungssystem (2) nach Anspruch 1,
**dadurch gekennzeichnet, daß**
das Datenstrom-Modul (2) den kontinuierlich verfügbaren, multimedialen Datenstrom als Broadcast-Daten über eine terrestrische Infrastruktur bezieht.

5. Verschlüsselungssystem (1) nach Anspruch 1,
**dadurch gekennzeichnet, daß**
das Datenstrom-Modul (2) den kontinuierlich verfügbaren, multimedialen Datenstrom als Broadcast-Daten über einen Satelliten bezieht.

6. Verschlüsselungssystem (1) nach Anspruch 1,
**dadurch gekennzeichnet, daß**
das Datenstrom-Modul (2) den kontinuierlich verfügbaren, multimedialen Datenstrom über eine Multimedia-Datenquelle (11) eines tragbaren Mediums bezieht.

7. Verschlüsselungssystem (1) nach Anspruch 1,
**dadurch gekennzeichnet, daß**
das Datenstrom-Modul auch nicht-multimediale, kontinuierlich verfügbare Datenströme über das Internet, ein Kabelnetz, eine terrestrische Infrastruktur, einen Satelliten oder ein tragbares Medium bezieht.

8. Verschlüsselungssystem (1) nach Anspruch 1,
**dadurch gekennzeichnet, daß**
das Datenstrom-Modul (2) eine Speichereinheit (12) aufweist, in der der empfangene Datenstrom zwischengespeichert wird.

9. Verschlüsselungssystem (1) nach Anspruch 1,
**gekennzeichnet durch**
ein Personalisierungs-Modul (3), das dem Schlüssel-Generator (6) Systemdaten zur Erzielung einer eindeutigen Zuordnung des elektronischen Gerätes zu einer Personengruppe und personalisierte Daten autorisierter Benutzer zuführt.

10. Verschlüsselungssystem (1) nach Anspruch 9,
**dadurch gekennzeichnet, daß**
das Personalisierungs-Modul (3) Hash-Werte biometrischer Daten und/oder FFT-Abdrücke von Stimmen authentifizierter Benutzer des elektronischen Gerätes erzeugt und diese in einer Speichereinheit (14) des Personalisierungs-Moduls (3) speichert.

11. Verschlüsselungssystem (1) nach Anspruch 9,
**dadurch gekennzeichnet, daß**
das Personalisierungs-Modul (3) eine weitere Speichereinheit (15) aufweist, in der die Systemdaten des elektronischen Gerätes gespeichert sind.

12. Verschlüsselungssystem (1) nach Anspruch 1,
**gekennzeichnet durch**
ein Zeitgeber-Modul (4), das die internen Uhren der elektronischen Geräte synchronisiert und den dem Schlüssel-Generator (6) zugeführte Datenstrom mit einem identischen Referenzzeitstempel versieht.

13. Verschlüsselungssystem (1) nach Anspruch 12,
**dadurch gekennzeichnet, daß**
das Zeitgeber-Modul (4) ein Positionierungssystem (16) aufweist, welches geographische Koordinaten und geographische Höhenangaben des jeweiligen elektronisches Gerätes empfängt.

14. Verschlüsselungssystem (1) nach Anspruch 12,
**dadurch gekennzeichnet, daß**
das Zeitgeber-Modul (4) ein Funkuhr-Modul (17) aufweist, das die Uhrzeit mit einer Genauigkeit einer Atomuhr empfängt.

15. Verschlüsselungssystem (1) nach Anspruch 12,
**dadurch gekennzeichnet, daß**
das Zeitgeber-Modul (4) eine Steuereinheit (18) aufweist, der die Positionierungsdaten und die Atomuhrzeit zugeführt werden und die für jedes elektronische Gerät eine positionsbezogene Verzögerung des Zeitstempels der Funkuhr berechnet, den Zeitstempel korrigiert und einen Referenzzeitstempel erzeugt.

16. Verschlüsselungssystem (1) nach Anspruch 15,
**dadurch gekennzeichnet, daß**
die Steuereinheit (18) beim Empfang der Positionierungsdaten über einen Satelliten die Entfernung zum Satellitensender ermittelt und eine Korrektur des Zeitstempels der empfangenen Positionierungsdaten durchführt.

17. Verschlüsselungssystem (1) nach Anspruch 1,
**dadurch gekennzeichnet, daß**
das Daten-Modul (5) die zu verschlüsselnden Daten komprimiert und in Pakete gleicher Länge unterteilt.

18. Verschlüsselungssystem (1) nach Anspruch 1,
**dadurch gekennzeichnet, daß**
das Daten-Modul (5) die zu entschlüsselnden Daten dekomprimiert.

19. Verschlüsselungssystem (1) nach Anspruch 1,
**dadurch gekennzeichnet, daß**
der Schlüssel-Generator (6) den ihm zugeführten Datenstrom mit dem Referenzzeitstempel belegt und nach einem vereinbarten Algorithmus ein Schlüsselwort für jede zu ver-/entschlüsselnde Nachricht erzeugt.

20. Verschlüsselungssystem (1) nach Anspruch 1, 9 oder 19,
**dadurch gekennzeichnet, daß**
zur Erzeugung eines Schlüsselwortes Systemdaten zur Erzielung einer eindeutigen Zuordnung des elektronischen Gerätes zu einer Personengruppe und/oder die personalisierten Daten autorisierter Benutzer einbezogen werden.

21. Verschlüsselungssystem (1) nach Anspruch 19,
**dadurch gekennzeichnet, daß**
die Länge des erzeugten Schlüsselwortes der Länge der zu verschlüsselnden Daten entspricht.

22. Verschlüsselungssystem (1) nach Anspruch 19,
**dadurch gekennzeichnet, daß**
die erzeugten Schlüsselwörter nicht wiederholbar sind.

23. Verschlüsselungssystem (1) nach Anspruch 19,
**dadurch gekennzeichnet, daß**
der Schlüssel-Generator (6) in regelmäßigen Zeitabschnitten nicht benötigte Schlüssel generiert und diese in einer Ersatzschlüssel-Einheit (19) der Ver-/Enschlüsselungseinheit (7) abspeichert.

24. Verschlüsselungssystem (1) nach Anspruch 21,
**dadurch gekennzeichnet, daß**
der Schlüssel-Generator (6) Hash-Werte des Inhalts der Ersatzschlüssel-Speichereinheit (19) erzeugt und in regelmäßigen Zeitabschnitten mit den Verschlüsselungssystemen (1) der miteinander kommunizierenden elektronischen Geräte austauscht.

25. Verschlüsselungssystem (1) nach Anspruch 1,
**dadurch gekennzeichnet, daß**
die Ver-/Entschlüsselungseinheit (7) die sensiblen Daten einem symmetrischen Verschlüsselungsverfahren entsprechenden Verfahren ver-/entschlüsselt.

26. Verschlüsselungssystem (1) nach Anspruch 1,
**dadurch gekennzeichnet, daß**
ein verwendeter Verschlüsselungsalgorithmus der Ver-/Entschlüsselungseinheit (7) auf einer arithmetischen XOR-Verknüpfung basiert.

27. Verschlüsselungssystem (1) nach Anspruch 1,
**dadurch gekennzeichnet, daß**
die Ver-/Entschlüsselungseinheit (7) zur Verschlüsselung der Daten Systemdaten zur Erzielung einer eindeutigen Zuordnung des elektronischen Gerätes zu einer Personengruppe mit einbezieht.

28. Verschlüsselungssystem (1) nach Anspruch 1,
**dadurch gekennzeichnet, daß**
die Ver-/Entschlüsselungseinheit (7) für die zur Schlüsselerzeugung vereinbarten Informationsabschnitte der für die Schlüsselerzeugung verwendeten Datenströme und Zeitstempel Hash-Werte erzeugt, diese beim Verschlüsseln der Daten in die verschlüsselten Daten integriert und ein die verschlüsselten Daten empfangenes Verschlüsselungssystem (1) beim Entschlüsseln der empfangenen Daten die Hash-Werte auswertet und mit den eigenen erzeugten Hash-Werten vergleicht.

29. Verschlüsselungssystem (1) nach einem der vorherigen Ansprüche,
**gekennzeichnet durch**
eine Steuereinheit (18), die einen wiederholten Datentransfer eines fehlerhaft empfangenen verschlüsselten Datenpaketes anfordert, wobei eine wiederholte Verschlüsselung des zu sendenden Datenpaketes mit einem in der Ersatzschlüssel-Einheit (19) gespeicherten Schlüssel vorgenommen wird.

30. Verfahren zur Ver-/Entschlüsselung sensibler Daten mit einem Verschlüsselungssystem (1) nach einem der Ansprüche 1 bis 28, umfassend die Schritte:
- ein mit einem Referenzzeitstempel versehener kontinuierlich verfügbarer, multimedialer Datenstrom wird einem Schlüssel-Generator (6) eines Verschlüsselungssystems (1) eines elektronischen Gerätes zugeführt, der aus dem Datenstrom variable, einem definierten Algorithmus entsprechende Schlüsselworte erzeugt,
- Daten und Schlüsselworte werden einer Ver-/Entschlüsselungseinheit (7) des Verschlüsselungssystems (1) zugeführt, die die Daten ver-/entschlüsselt und
- die ver-/entschlüsselten Daten werden an eine Ausgabe-Einheit (8) des Verschlüsselungssystems (1) weitergeleitet,
wobei die erzeugten Schlüsselworte gleichzeitig auf den Verschlüsselungssystemen (1) miteinander kommunizierenden elektronischer Geräte verfügbar sind und ein einzelnes Schlüsselwort zur Ver-/Entschlüsselung der Daten nur einmalig bezogen auf einen einzelnen Datenaustausch verschlüsselter Daten genutzt wird.

31. Verfahren nach Anspruch 30,
**dadurch gekennzeichnet, daß**
das Verschlüsselungsverfahren ein symmetrisches Verschlüsselungsverfahren ist.

## Claims

1. An encryption system (1) for a first electronic device for selectively encrypting and decrypting sensitive data during a data interchange with at least one second electronic device communicating with the first electronic device having a similar encryption system (1), comprising:
- a data stream module (2) for providing a synchronous, continuously available multimedia data stream as raw material for key generation,
- a data module (5) for preparing the data for the encryption/decryption,
- a key generator (6) to which an agreed information portion of the continuously available multimedia data stream from the data stream module (2) is supplied,
- an encryption/decryption unit (7) which is connected to said data module (5) and to said key generator (6) and which encrypts/decrypts the sensitive data using a keyword, and
- an output unit (7) for forwarding the encrypted/decrypted data,
wherein the key generator (6) takes the data stream supplied to it and generates a respective keyword for each message which is to be encrypted/decrypted for the first device, which is simultaneously generated by a key word generator (6) of the encryption system (1) of the at least one second device.

2. The encryption system (1) as claimed in claim 1, **characterized in that** the data stream module (2) obtains the continuously available multimedia data stream from digital data stream suppliers which are available on the Internet.

3. The encryption system (1) as claimed in claim 1, **characterized in that** the data stream module (2) obtains the continuously available multimedia data stream as broadcast data via a cable network.

4. The encryption system (1) as claimed in claim 1, **characterized in that** the data stream module (2) obtains the continuously available multimedia data stream as broadcast data via a terrestrial infrastructure.

5. The encryption system (1) as claimed in claim 1, **characterized in that** the data stream module (2) obtains the continuously available multimedia data stream as broadcast data via a satellite.

6. The encryption system (1) as claimed in claim 1, **characterized in that** the data stream module (2) obtains the continuously available multimedia data stream via a multimedia data source (11) of a portable medium.

7. The encryption system (1) as claimed in claim 1, **characterized in that** the data stream module obtains even non-multimedia continuously available data streams via the internet, a cable network, a terrestrial infrastructure, a satellite or a portable medium.

8. The encryption system (1) as claimed in claim 1, **characterized in that** the data stream module (2) has a memory unit (12) which buffer-stores the data stream received.

9. The encryption system (1) as claimed in claim 1, **characterized by** a personalization module (3) which supplies the key generator (6) with system data for achieving a unique assignment of the electronic device to a group of persons and personalized data of authorized users.

10. The encryption system (1) as claimed in claim 9, **characterized in that** the personalization module (3) generates hash values for biometric data and/or FFT prints of voices of authenticated users of the electronic device and stores them in a memory unit (14) of the personalization module (3).

11. The encryption system (1) as claimed in claim 9, **characterized in that** the personalization module (3) has a further memory unit (15) in which is stored the system data of the electronic device.

12. The encryption system (1) as claimed in claim 1, **characterized by** a timer module (4) which synchronizes the internal clocks of the electronic devices and provides the data stream supplied to the key generator (6) with an identical reference timestamp.

13. The encryption system (1) as claimed in claim 12, **characterized in that** the timer module (4) has a positioning system (16) which receives geographical coordinates and geographical height statements of the respective electronic device.

14. The encryption system (1) as claimed in claim 12, **characterized in that** the timer module (4) has a radio clock module (17) which receives the time of day with an accuracy of an atomic clock.

15. The encryption system (1) as claimed in claim 12, **characterized in that** the timer module (4) has a control unit (18) which is supplied with the positioning data and with the atomic clock time and which, for each electronic device, calculates a position-based delay for the timestamp of the radio clock, corrects the timestamp and generates a reference timestamp.

16. The encryption system (1) as claimed in claim 15, **characterized in that** the control unit (18), upon receiving the positioning data via a satellite, ascertains the distance from the satellite transmitter and corrects the timestamp for the positioning data received.

17. The encryption system (1) as claimed in claim 1, **characterized in that** the data module (5) compresses the data to be encrypted and divides them into packets of equal length.

18. The encryption system (1) as claimed in claim 1, **characterized in that** the data module (5) decompresses the data to be decrypted.

19. The encryption system (1) as claimed in claim 1, 9 or 19, **characterized in that** the key generator (6) assigns the data stream supplied to it with the reference timestamp and uses an agreed algorithm to generate a keyword for each message to be encrypted/decrypted.

20. The encryption system (1) as claimed in claim 1, 9 or 19 **characterized in that** a keyword is generated by including the system data for achieving a unique assignment of the electronic device to a group of persons and/or the personalized data of authorized users.

21. The encryption system (1) as claimed in claim 19, **characterized in that** the length of the keyword generated corresponds to the length of the data to be encrypted.

22. The encryption system (1) as claimed in claim 19, **characterized in that** the keywords generated are not repeatable.

23. The encryption system (1) as claimed in claim 19, **characterized in that** the key generator (6) generates unnecessary keys at regular intervals of time and stores them in a substitute key unit (19) of the encryption/decryption unit (7).

24. The encryption system (1) as claimed in claim 21, **characterized in that** the key generator (6) generates hash values for the content of the substitute key memory unit (19) and interchanges them at regular intervals of time with the encryption systems (1) of the electronic devices communicating with one another.

25. The encryption system (1) as claimed in claim 1, **characterized in that** the encryption/decryption unit (7) encrypts/decrypts the sensitive data using a method corresponding to a symmetrical encryption methods.

26. The encryption system (1) as claimed in claim 1, **characterized in that** an encryption algorithm used in the encryption/decryption unit (7) is based on an arithmetic XOR connective.

27. The encryption system (1) as claimed in claim 1, **characterized in that** the encryption/decryption unit (7) encrypts the data by considering system data for achieving a unique assignment of the electronic device to a group of persons as well.

28. The encryption system (1) as claimed in claim 1, **characterized in that** the encryption/decryption unit (7) generates hash values for those information portions of the data streams and timestamps used for key generation which have been agreed for key generation, incorporates said hash values into the encrypted data when the data are encrypted, and an encryption system (1) receiving the encrypted data evaluates the hash values when the received data are decrypted and compares said hash values with its own hash values which have been generated.

29. The encryption system (1) according to one of the preceding claims, **characterized by** a control unit (18) which requests a repeated data transfer for an encrypted data packet which has been received incorrectly, wherein a repeat encryption for the data packet to be transmitted is performed using a key which is stored in the substitute key unit (19).

30. A method for encrypting/decrypting sensitive data using an encryption system (1) according to one of claims 1 to 28, comprising the following steps:
- a continuously available data stream provided with a reference timestamp is supplied to a key generator (6) in an encryption system (1) in an electronic device, said key generator taking the data stream and generating variable keywords which correspond to a defined algorithm,
- data and keywords are supplied to an encryption/decryption unit (7) of the encryption system (1), said encryption/decryption unit (7) encrypting/decrypting the data, and
- the encrypted/decrypted data are forwarded to an output unit (8) of the encryption system (1),
wherein the keywords generated are simultaneously available on the encryption systems (1) of electronic devices communicating with one another, and a single keyword is used to encrypt/decrypt the data only one time for a single data interchange of encrypted data.

31. The method as claimed in claim 30, **characterized in that** the encryption method is a symmetrical encryption method.

## Revendications

1. Un système de cryptage (1) pour un premier dispositif électronique pour crypter et décrypter d'une manière sélective de données sensibles lors d'un échange de données avec au moins un deuxième dispositif électronique qui communique avec le premier dispositif électronique ayant un système de cryptage similaire (1), comprenant :
- un module de flux de données (2) pour la disposition d'un flux de données multimédia synchrone et disponible en permanence comme matière première pour la génération d'une clé,
- un module de données (5) pour préparer les données pour le cryptage/décryptage,
- un générateur de clé (6) auquel l'on a fourni un segment d'information approuvée du flux de données multimédia disponible en permanence, ledit flux venant du module de flux de données (2),
- une unité de cryptage/décryptage (7) connectée audit module de données (5) et audit générateur de clé (6) et qui encrypte/décrypte les données sensibles à l'aide d'un mot-clé, et
- une unité de sortie (7) pour retransmettre les données cryptées/décryptées,
dans laquelle le générateur de clé (6) prend le flux de données qui lui a été fourni et génère un mot-clé respectif pour chaque message à être crypté/décrypté pour le premier dispositif, lequel est simultanément généré par un générateur de mot-clé (6) du système de cryptage (1) d'au moins un deuxième dispositif.

2. Le système de cryptage (1) selon la revendication 1, **caractérisé en ce que** le module de flux de données (2) obtient le flux de données multimédia disponible en permanence à partir de
fournisseurs numériques de flux de données disponibles sur l'Internet.

3. Le système de cryptage (1) selon la revendication 1, **caractérisé en ce que** le module de flux de données (2) obtient le flux de données multimédia disponible en permanence comme données de diffusion au moyen d'un réseau câblé.

4. Le système de cryptage (1) selon la revendication 1, **caractérisé en ce que** le module de flux de données (2) obtient le flux de données multimédia disponible en permanence comme données de diffusion à travers une infrastructure terrestre.

5. Le système de cryptage (1) selon la revendication 1, **caractérisé en ce que** le module de flux de données (2) obtient le flux de données multimédia disponible en permanence comme données de diffusion à travers un satellite.

6. Le système de cryptage (1) selon la revendication 1, **caractérisé en ce que** le module de flux de données (2) obtient le flux de données multimédia disponible en permanence via une source de données multimédia (11) d'un moyen portable.

7. Le système de cryptage (1) selon la revendication 1, **caractérisé en ce que** le module de flux de données obtient même des flux de données non-multimédia disponibles en permanence à travers l'Internet, un réseau câblé, une infrastructure terrestre, un satellite ou un moyen portable.

8. Le système de cryptage (1) selon la revendication 1, **caractérisé en ce que** le module de flux de données (2) possède une unité de mémoire (12) qui stocke temporairement le flux de données reçues.

9. Le système de cryptage (1) selon la revendication 1, **caractérisé par** un module de personnalisation (3) qui alimente le générateur de clé (6) avec des données du système afin de réaliser une attribution unique du dispositif électronique à un groupe de personnes et les données personnalisées des utilisateurs autorisés.

10. Le système de cryptage (1) selon la revendication 9, **caractérisé en ce que** le module de personnalisation (3) génère des valeurs de hachage pour des données biométriques et/ou l'empreinte vocale FFT des utilisateurs du dispositif électronique authentifiés et les stocke dans une unité de mémoire (14) du module de personnalisation (3).

11. Le système de cryptage (1) selon la revendication 9, **caractérisé en ce que** le module de personnalisation (3) possède une unité de mémoire additionnelle (15) dans laquelle les données du système du dispositif électronique sont stockées.

12. Le système de cryptage (1) selon la revendication 1, **caractérisé par** un module de temporisation (4) qui synchronise les horloges internes des dispositifs électroniques et fournit au flux de données fournies au générateur de clé (6) un horodatage de référence identique.

13. Le système de cryptage (1) selon la revendication 12, **caractérisé en ce que** le module de temporisation (4) possède un système de positionnement (16) qui reçoit des coordonnées géographiques et des attestations d'altitude géographique du dispositif électronique respectif.

14. Le système de cryptage (1) selon la revendication 12, **caractérisé en ce que** le module de temporisation (4) possède un module d'horloge radio-pilotée (17) qui reçoit l'heure du jour avec une précision d'une horloge atomique.

15. Le système de cryptage (1) selon la revendication 12, **caractérisé en ce que** le module de temporisation (4) possède une unité de contrôle (18) qui est fournie avec des données de positionnement et l'heure de l'horloge atomique et qui, pour chaque dispositif électronique, calcule un retard selon la position pour l'horodatage de l'horloge radio-pilotée, corrige l'horodatage et génère un horodatage de référence.

16. Le système de cryptage (1) selon la revendication 15, **caractérisé en ce que** l'unité de contrôle (18), suite à la réception des données de positionnement grâce au satellite, vérifie la distance de l'émetteur satellite et corrige l'horodatage pour les données de positionnement reçues.

17. Le système de cryptage (1) selon la revendication 1, **caractérisé en ce que** le module de données (5) compresse les données à être cryptées et les divise en paquets de longueur identique.

18. Le système de cryptage (1) selon la revendication 1, **caractérisé en ce que** le module de données (5) décompresse les données à être décryptées.

19. Le système de cryptage (1) selon les revendications 1, 9 ou 19, **caractérisé en ce que** le générateur de clé (6) attribue le flux de données qui lui a été fourni avec l'horodatage de référence et utilise un algorithme approuvé et génère un mot-clé pour chaque message à être crypté/décrypté.

20. Le système de cryptage (1) selon les revendications 1, 9 ou 19, **caractérisé en ce qu'**un mot-clé est généré par l'inclusion des données du système afin de réaliser une attribution unique du dispositif électronique à un groupe de personnes et/ou les données personnalisées des utilisateurs autorisés.

21. Le système de cryptage (1) selon la revendication 19, **caractérisé en ce que** la longueur du mot-clé généré correspond à la longueur des données à être cryptées.

22. Le système de cryptage (1) selon la revendication 19, **caractérisé en ce que** les mots-clés générés ne sont pas répétables.

23. Le système de cryptage (1) selon la revendication 19, **caractérisé en ce que** le générateur de clé (6) génère des clés superflues aux intervalles réguliers de temps et les stocke dans une unité de clé de substitution (19) de l'unité de cryptage/décryptage (7).

24. Le système de cryptage (1) selon la revendication 21, **caractérisé en ce que** le générateur de clé (6) génère des valeurs de hachage pour le contenu de l'unité de mémoire de la clé de substitution (19) et les échange aux intervalles réguliers de temps avec les systèmes de cryptage (1) des dispositifs électroniques qui communiquent entre eux.

25. Le système de cryptage (1) selon la revendication 1, **caractérisé en ce que** l'unité de cryptage/décryptage (7) encrypte/décrypte les données sensibles à l'aide d'un procédé qui correspond à des procédés de cryptage symétrique.

26. Le système de cryptage (1) selon la revendication 1, **caractérisé en ce qu'**un algorithme de cryptage utilisé dans l'unité de cryptage/décryptage (7) est basé sur un connecteur du lien arithmétique OU exclusif.

27. Le système de cryptage (1) selon la revendication 1, **caractérisé en ce que** l'unité de cryptage/décryptage (7) encrypte les données en considérant de données du système afin de réaliser une attribution unique de l'appareil électronique à un groupe de personnes également.

28. Le système de cryptage (1) selon la revendication 1, **caractérisé en ce que** l'unité de cryptage/décryptage (7) génère des valeurs de hachage pour les segments d'information des flux de données et des horodatages utilisés pour la génération de clés et qui ont été approuvés pour la génération de clés; intègre lesdites valeurs de hachage dans les données cryptées lorsque les données sont cryptées; et un système de cryptage (1) qui reçoit les données cryptées évalue les valeurs de hachage lorsque les données reçues sont décryptées, et compare lesdites valeurs de hachage avec ses propres valeurs de hachage qui ont été générées.

29. Le système de cryptage (1) selon une des revendications précédentes, **caractérisé par** une unité de contrôle (18) qui demande un transfert récurrent de données pour un paquet de données cryptées reçu de manière erronée, dans lequel un cryptage récurrent pour le paquet de données à être transmis est exécuté à l'aide d'une clé qui est stockée dans l'unité de clé de substitution (19).

30. Un procédé pour crypter/décrypter des données sensibles à l'aide d'un système de cryptage (1) selon une des revendications 1 à 28, comprenant les étapes suivantes :
- un flux de données ayant un horodatage de référence est fourni à un générateur de clé (6) dans un système de cryptage (1) dans un dispositif électronique, où ledit générateur de clé prend le flux de données et génère des mots-clés variables qui correspondent à un algorithme défini,
- des données et des mots-clés sont fournis à une unité de cryptage/décryptage (7) du système de cryptage (1), où ladite unité de cryptage/décryptage (7) crypte/décrypte les données, et
- les données cryptées/décryptées sont transmises vers une unité de sortie (8) du système de cryptage (1),
dans lequel les mots-clés générés sont disponibles simultanément dans les systèmes de cryptage (1) des dispositifs électroniques qui communiquent entre eux, et un seul mot-clé est utilisé pour crypter/décrypter les données une seule fois pour un seul échange de données cryptées.

31. Le procédé selon la revendication 30, **caractérisé en ce que** le procédé de cryptage est un procédé de cryptage symétrique.
